# EUROPÄISCHE PATENTSCHRIFT

(11) **EP 0 663 884 B1**
(45) Veröffentlichungstag und Bekanntmachung des Hinweises auf die Patenterteilung: **28.01.1998**
(21) Anmeldenummer: 93921821.0
(22) Anmeldetag: 12.10.1993
(51) Int. Cl.: B65D 77/20, B65D 77/38, B29C 65/76

(54) **DURCH SIEGELN VERSCHLIESSBARER, NACH DEM ERSTEN ÖFFNEN WIEDERVERSCHLIESSBARER BEHÄLTER, SOWIE VERFAHREN UND FOLIE ZU SEINER HERSTELLUNG**
SEALABLE CONTAINER RECLOSABLE AFTER BEING OPENED A FIRST TIME, PROCESS AND FOIL FOR PRODUCING THE SAME
CONTENANT SCELLABLE POUVANT ETRE REFERME APRES LA PREMIERE OUVERTURE, PROCEDE ET FEUILLE PERMETTANT DE LE REALISER

(30) Priorität: 13.10.1992 DE 4234513
(43) Veröffentlichungstag der Anmeldung: 26.07.1995
(73) Patentinhaber: RPC Containers Ltd., Raunds, Northants NN9 6ED (GB)
(72) Erfinder: LIPP, Roland, D-27432 Bremervörde (DE)
(74) Vertreter: Leonhard, Frank Reimund, Dipl.-Ing.
(86) Internationale Anmeldenummer: DE9300972
(87) Internationale Veröffentlichungsnummer: WO9408870

(56) Entgegenhaltungen:
- EP-A- 0 427 513
- DE-A- 2 944 344
- GB-A- 2 090 191
- US-A- 4 252 846
- US-A- 4 961 495

## Beschreibung

Die Erfindung betrifft einen durch Siegeln hermetisch verschließbaren Behälter gemäß Oberbegriff des Anspruchs 1, ein Verfahren zu seiner Herstellung (Anspruch 7) sowie eine zu seiner Herstellung vorgesehene tiefziehbare Folie (Anspruch 9).

Es sind vielfältig becherförmige Behälter für die verschiedensten Füllgüter insbesondere im Lebensmittelbereich bekannt, bei denen ein becherförmiger Unterteil und/oder der Deckel aus einer Kunststoffolie oder Kunststoff-Verbundfolie mit wenigstens einseitiger siegelfähiger Schicht hergestellt sind (vgl. die DE-A-29 44 344, von der im Anspruch 1 ausgegangen wird). Die verwendeten Verbundfolien bestehen selbst aus einem kalt- oder heißsiegelbaren Material oder weisen wenigstens eine zusätzliche Schicht aus diesem Material auf. Zum Öffnen wird entweder der Deckel vom Behälter im Bereich der Siegelzone wieder abgelöst oder Behälter oder Deckel sind so ausgebildet, daß zwar die Siegelverbindung erhalten bleibt, jedoch ein Abschnitt aus der den Deckel oder den Behälter bildenen Verbundfolie aus der Verbundfolie beim Öffnen gelöst wird, oder daß der Deckel innerhalb der Siegelzone mit einer Schwächungslinie versehen ist, so daß der Behälter durch Herausreißen des mittleren Teils des Deckels (des Deckelspiegels) geöffnet werden kann.

Aus der GB-A 2,090,191 (American Can Company) ist eine Mehrlagen-Struktur mit einer Heißsiegel-Schicht dem Fachmann zugänglich, die ablösbare Heißsiegel-Verbindungen ermöglicht. 15 % bis 80 % von EVOH werden verwendet, um einen Kunststoff-Film zu bilden, der in einem Extruder ausgebracht wird, um auf eine weiche, flexible Mehrlagen-Struktur zur Bildung eines flexiblen Beutels (flexible pouch, gemäß dortiger Seite 2, Zeilen 1-5) zu bilden. Der flexible Beutel wird an vier Seiten als rechteckiges Paket oder Kissen oder Tasche (rectangular package or sachet) geformt, um ohne Möglichkeit des Wiederverschließens Lebensmittelprodukte aufzunehmen. Nicht flexibel und weich ist die in der zuvor erwähnten DE-A 29 44 344 beschriebene Kunststoffverpackung, sie ist vakuumthermogeformt und hat einen wiederverwendbaren Deckel, der mit dem Unterteil zur Bildung eines Behälters heißverklebt ist, welche Heißverklebung durch Aufbringen einer Klebstoffschicht auf den thermoformbaren Kunststoff und anschließendes Siegeln erreicht wird. Die Wiederverwendbarkeit des Deckels ergibt sich aus einem Schnappsitz des Deckels (vgl. dort Seiten 12 und 13).

Bei diesen Behältern ist es schwierig, die Verschlußkraft einerseits und die Ablösekraft andererseits so aufeinander abzustimmen, daß ein bei der Lagerung und beim Transport der Behälter zuverlässiger hermetischer Verschluß erreicht wird und dennoch ein sicheres Lösen (Öffnen) ohne zu hohen Kraftaufwand möglich ist. Dies gilt insbesondere für die wiederverschließbaren Behälter der in Frage stehenden Art.

Es ist **Aufgabe der Erfindung** einen Behälter der eingangs näher bezeichneten Art so weiterzubilden, daß einerseits eine zuverlässige hermetische Abdichtung sichergestellt ist und gleichzeitig ein leichtes Öffnen und vor allem ein zuverlässiges Wiederverschließen möglich sind.

Diese Aufgabe wird mit Anspruch 1 oder 7 oder 9 gelöst. Dabei ist die Zone der hermetischen Abdichtung und die Zone, in der die zum Wiederverschließen zusammenwirkenden mechanischen Eingriffsbereiche von Deckel und Unterteil liegen, in radialer Richtung voneinander unabhängig und getrennt, wobei die hermetische Dichtungszone (radial) außerhalb der mechanischen Verschlußzone angeordnet sein kann (Anspruch 2). Beim Öffnen werden die zum Lösen der hermetischen Dichtungszone erforderlichen Kräfte und die zum Lösen der mechanischen Verriegelungszone notwendigen Kräfte nacheinander erforderlich und wirksam, so daß insgesamt die anfängliche Öffnungskraft gering bleibt. Es ist weder eine Delaminierung einer Verbundfolie noch ein Lösen eines als Wiederverschlußteil wirkenden gesonderten Folienprofils erforderlich.

Die Verbindung im Bereich der hermetisch abdichtenden Zone zwischen Deckel und Unterteil erfolgt durch einen "Kleber", der so ausgewählt und in der Matrix der tiefziehbaren Folie angeordnet ist, daß er in der Siegelzone erst in Erscheinung tritt, wenn die Deckel- und Unterteilbereiche in der Siegelzone mit einem vorbestimmten Druck und mit einer vorbestimmten erhöhten Temperatur gleichzeitig beaufschlagt werden (Anspruch 1, Anspruch 10). Der Kleber ist dabei nicht, wie sonst üblich, in Form einer siegelfähigen Folie oder Folienschicht vorgesehen, er ist vielmehr in einen anderen, die Matrix der tiefziehbaren Folie bildenen Kunststoff eingebettet oder eingemischt oder integriert (Anspruch 9). Durch den Druck und die Temperatur beim Siegeln (Anspruch 8) wird nur dieser Siegelkunststoff aktiviert, z.B. in den schmelzflüssigen Zustand überführt und in den Kontaktbereich der Siegelzone zwischen Deckel und Unterteil ausgepreßt (ausgeschwitzt), um dort in der begrenzten Siegelzone eine durchgehende, hocheffektive Kleberschicht zu bilden.

Der Kleber besteht aus einem heißsiegelbaren Kunststoffmaterial, der im trockenen oder im schmelzflüssigen Zustand mit dem Matrixmaterial vermischt wird, bevor daraus die Folie gebildet wird (Anspruch 7). Das Matrixmaterial ist dabei so gewählt, daß es bei dem Druck und der Temperatur während des Siegelns selbst nicht schmilzt, also an der hermetisch dichtenden Siegelverbindung nicht beteiligt ist. Es können daher für die in der Siegelzone aufeinandertreffenden Folien von Deckel und Unterteil unterschiedliche Kunststoffmaterialien als Matrix eingesetzt werden. Der Kleber kann im Matrixmaterial nur des Deckels oder nur des Unterteils oder in beiden Matrixmaterialien integriert sein.

Die Erfindung wird nachfolgend anhand mehrerer Ausführungs**beispiele** näher erläutert.
- **Figur 1**: ist ein Beispiel eines Behälters in Seitenansicht.
- **Figur 2**: ist im Ausschnitt und im größeren Maßstab ein Schnitt durch eine Verbundfolie.
- **Figur 3**: zeigt in ähnlicher Darstellung wie Figur 2 die Herstellung der Siegelzone bei Verwendung einer Verbundfolie nach Figur 2.
- Figur 4: in ähnlicher Darstellung wie Figur 2 das Lösen von Unterteil und Deckel beim Öffnen im Bereich der Siegelzone und
- Figur 5: im Querschnitt eine vorteilhafte Ausführungsform für einen Behälter gemäß der Erfindung.

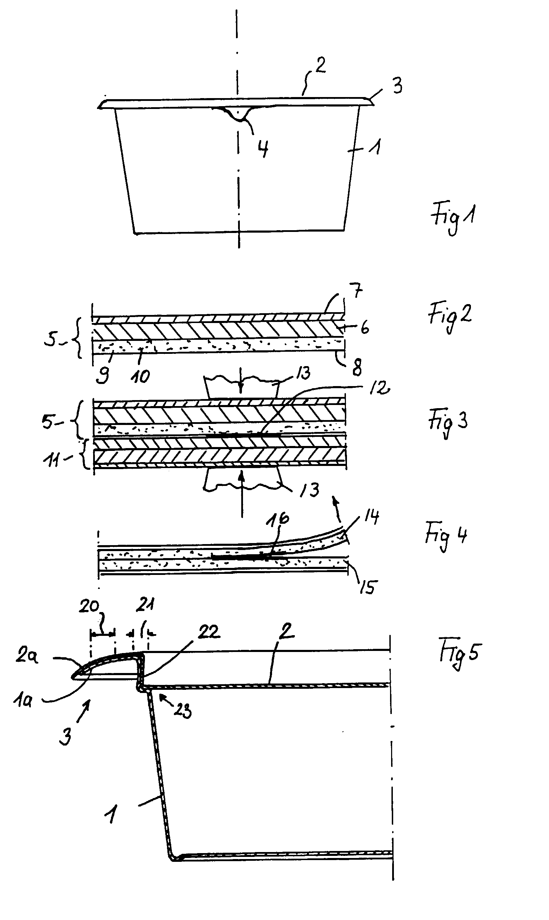

Nach Figur 1 und 5 besteht der Behälter aus einem becherförmigen Unterteil 1, der aus einer Kunststoffolie oder einer Kunststoff-Verbundfolie durch Tiefziehen in üblicher Weise hergestellt sein kann. Der Unterteil kann aber auch aus einem anderen Material bestehen.

Nach dem Füllen wird der Unterteil mit einem Deckel 2 hermetisch verschlossen. Der Deckel 2 besteht aus einer tiefziehbaren Folie oder Verbundfolie. Die Verbindung zwischen Deckel und Unterteil erfolgt wie üblich, im Randbereich 3. Der Randbereich von Unterteil 1 und Deckel 2 ist dabei so ausgebildet, daß eine durch mechanischen Eingriff wirksame Verschlußzone 21 und eine durch Kleben oder Heißsiegeln hermetische Verbindungszone 20 vorliegen, die voneinander unabhängig und in radialer Richtung voneinander getrennt sind. Bevorzugt liegt dabei die Klebe- oder Siegelzone 20 radial außerhalb der mechanischen Verschlußzone 21.

Im Bereich der mechanischen Verschlußzone können Deckel und Unterteil miteinander zusammenwirkende Eingriffsabschnitte 22 aufweisen. Diese können so ausgebildet und bemessen sein, daß sich ein kraftschlüssiger, vornehmlich durch Reibung wirksamer mechanischer Verschluß ergibt. Die zusammenwirkenden und ineinandergreifenden Bereiche können aber auch, wie in Figur 5 dargestellt ist, schwach hinterschnitten sein, so daß sich neben einer kraftschlüssigen auch eine formschlüssige Schnappverbindung ergibt.

Die Ränder von Deckel 2 und Unterteil 1 erstrecken sich von der mechanischen Eingriffszone 21 aus flanschartig radial nach außen mit vorzugsweise schwacher Neigung oder Krümmung nach unten, wie dies Figur 5 zeigt. Diese Randflansche la und 2a liegen in direktem Kontakt und nehmen die Siegelzone 20 auf. Dabei kann der Randbereich 2a des Deckels gegenüber dem Randflansch la des Unterteils, wie in Figur 5 gezeigt, überstehen um ein leichteres Erfassen des Randflansches 2a des Deckels 2 zu ermöglichen. Es kann aber auch eine besondere Grifflasche 4 gemäß Figur 1 am Deckelrandflansch vorgesehen sein.

Die Materialien von Deckel 2 und Unterteil 1 sind so gewählt, daß wenigstens in den beiden Verschlußzonen 20, 21 beim erstmaligen Öffnen des Deckels 2 eine bleibende Verformung des Deckels nicht auftritt, so daß die mechanischen Eingriffsteile 22 zum Wiederverschließen voll intakt bleiben.

Es ist auch ersichtlich, daß beim Öffnen zunächt nur die zum Lösen der Siegel- oder Klebeverbindung 20 erforderliche Kraft aufgewandt werden muß, und erst nachträglich der Kraftaufwand den Verschlußkräften in der mechanischen Verschlußzone 21 entsprechen müssen. Zur Hertellung wenigstens des Deckels oder des Unterteils, bevorzugt auch für die Herstellung beider Teile, wird eine tiefziehbare Folie, insb. eine Verbundfolie verwendet. Eine solche Verbundfolie besteht in der bevorzugten Ausführungsform nach Figur 2 aus einer Mittelschicht 6 von ausreichender Festigkeit und Steifigkeit, welche ggf. auf der Außenseite eine leicht bedruckbare Schicht 7 aufweist. Auf der Innenseite ist eine polymere Schicht 8 vorgesehen, die aus einem polymeren Matrixmaterial 9 besteht. In diesem polymeren Matrixmaterial der Schicht 8 ist der Kleber oder das siegelfähige Material integriert oder eingemischt.

Bei der Herstellung kann das Matrixmaterial und das Klebermaterial jeweils in granularer Form trocken miteinander vermischt werden, bevor die Mischung geschmolzen und zu einer Folie oder Folienschicht verarbeitet wird. Das Matrixmaterial und das Klebermaterial können aber auch in geschmolzenem Zustand miteinander gemischt werden. In beiden Fällen ist das Klebermaterial mehr oder weniger gleichförmig im Matrixmaterial der Folie oder Folienschicht integriert oder verteilt bzw. eingebettet. Das Klebermaterial unterscheidet sich vor allem dadurch von dem Matrixmaterial, daß die Folie oder Folienschicht zwar in üblicher Weise dem erforderlichen Tiefziehvorgang unterzogen werden kann, während jedoch bei der Verbindung von Deckel und Unterteil im Bereich der Siegelzone durch in diesem Bereich örtlich begrenzte Aufbringung von Druck und erhöhter Temperatur nur das eingebettete Klebermaterial, nicht aber das Matrixmaterial in den schmelzfähigen Zustand gelangt. Hierdurch und durch den über die Siegelwerkzeuge 13 (Figur 3) aufgebrachten Druck gelangt das klebe- oder siegelfähige Kunststoffmaterial in die Kontaktzone zwischen der Deckelfolie und der Unterteilfolie 11. Das klebe- oder siegelfähige Material wird aus dem Matrixmaterial dabei sozusagen ausgeschwitzt, so daß sich in der begrenzten Siegelzone eine durchgehende, bei Erkalten hermetisch wirksame Siegelverbindung 12 von ausreichender Verschlußfestigkeit ergibt.

Bei dem Ausführungsbeispiel nach Figur 3 ist nur in der Deckelfolie 5 eine Schicht 8 aus Matrixmaterial und siegelfähigem Material vorgesehen. Bei der Ausführungsform nach Figur 4 weist sowohl die Deckelfolie 14 als auch die Folie 15 des Unterteils eine solche Schicht auf, so daß aus beiden sich berührenden Schichten das Klebermaterial aus dem zugehörigen Matrixmaterial zur Bildung der Siegelverbindung 16 ausgeschwitzt wird.

Bei der Ausführungsform nach Figur 4 ist es nicht notwendig, daß die Matrixmaterialien der Schichten 14 und 15 gleich sind. So kann das Matrixmaterial der Schicht 14 z.B. aus Polypropylen des Typs A und das Matrixmaterial der Schicht 15 aus Polypropylen des Typs (As) B bestehen. Beide Klebermaterialien sollten aber heiß siegelfähig sein.

In jedem Fall ist die Materialkombination in den in Frage stehenden Folienschichten so zu wählen, daß beim Siegeln der in die Matrix eingearbeitete Kleber zuerst schmilzt und in der Berührungszone der Verbindung einen entsprechenden im wesentlichen zusammenhängenden Schmelzfilm bildet, der zum Öffnen des Behälters aufreißt. Da der Schmelzfilm in dem Matrixmaterial nach Herstellen der Siegelverbindung auch mechanisch, also formschlüssig verankert ist, ergibt sich eine zuverlässige, ausreichend feste hermetische Siegelnaht, die dennoch ohne übermäßigen Kraftaufwand zum Öffnen wieder gelöst werden kann. Nach dem ersten Verschließen trägt dabei die mechanische Verschlußzone 21 wesentlich zu den Verschlußkräften bei, so daß der Aufreißwiderstand im Bereich der Siegelzone 20 entsprechend klein gehalten werden kann, ohne daß die Gefahr eines zufälligen Öffnens besteht.

Durch die schräge oder gekrümmte Ausbildung des Deckelrandes und des Randes des Unterteils im Bereich der Siegelzone erhält man eine ausreichende Versteifung und Formhaltigkeit, so daß beim erstmaligen Öffnen der Deckel und insb. dessen mechanischen Verschlußbereiche 22 ihre Form beibehalten, so daß der Deckel in jedem Fall zum Wiederverschließen einwandfrei wiederverwendbar ist.

## Patentansprüche

1. Behälter, bestehend aus einem becherfömigen Unterteil (1) und einem durch Heißsiegeln damit hermetisch verbindbaren Deckel (2), bei dem der Deckel (2) und/oder das becherförmige Unterteil (1) aus einer tiefziehbaren Folie mit heißsiegelbarem Kunststoff besteht, wobei der durch Heißsiegeln hermetisch verschließbare Behälter (1,2) einen entlang einer Siegelzone (20) wiederablösbaren Deckel (2) aufweist, und wobei Deckel (2) und becherförmiges Unterteil (1) von der Siegelzone (20) unabhängig im Randbereich (3) zum kraft- und/oder formschlüssigen Wiederverschließen insbesondere profiliert zusammenwirkende Eingriffsbereiche (21,22) als mechanische Verschlußzone haben,
**dadurch gekennzeichnet,**
daß die tiefziehbare Folie eine Matrix (9) aus einem vorbestimmten ersten Kunststoff ist, in welche Matrix (9) ein heißsiegelbarer Kunststoff (10) als zweiter Kunststoff eingebettet ist, wobei der zweite Kunststoff nur durch gleichzeitige Anwendung von erhöhtem Druck und erhöhter Temperatur in einem Kontaktbereich der Siegelzone (20) als hermetische Dichtungszone aktivierbar ist.

2. Behälter nach Anspruch 1, **dadurch gekennzeichnet**, daß die Siegelzone (20) radial außerhalb der mechanischen Eingriffsbereiche (21;22) angeordnet ist.

3. Behälter nach einem der Ansprüche 1 oder 2, **dadurch gekennzeichnet,** daß wenigstens die die mechanisch zusammenwirkenden Eingriffsbereiche (21,22) und die Siegelzone (20) bestimmenden Randbereiche von Deckel (2) und Unterteil (1) für die zum Lösen der Siegelung erforderlichen Kräfte ausreichend formsteif oder formhaltig ausgebildet sind.

4. Behälter nach einem der Ansprüche 1 bis 3, **dadurch gekennzeichnet**, daß das Unterteil (1) und der Deckel (2) jeweils als Begrenzungsanschlag zur Bestimmung der relativen Schließlage zusammenwirkende Schulterbereiche (23); in radialer Richtung daran anschließend aufeinander abgestimmte, profilierte und unter Reibung und/oder schnappartig ineinandergreifende, den mechanischen Verschluß (21) bildende Randzonen (22) und in radialer Richtung daran anschließende, die Siegelzone (20) bestimmende äußere Randbereiche (la,2a) aufweisen.

5. Behälter nach Anspruch 4, **dadurch gekennzeichnet,** daß die einen mechanischen Verschluß (21) bildenden Randzonen (22) ineinandergreifende, im wesentlichen zylindrische oder demgegenüber schwach hinterschnittene Randabschnitte sind.

6. Behälter nach Anspruch 4 oder 5, **dadurch gekennzeichnet**, daß die die Siegelzone (20) bestimmenden Randbereiche (1a,2a) nach außen weisen und leicht nach unten geneigt sind.

7. **Verfahren** zum Herstellen eines Behälters nach den Ansprüchen 1 bis 6, **dadurch gekennzeichnet,** daß
(a) im Granulatzustand oder im erschmolzenen Zustand ein eine Matrix (9) bildendes Polypropylen und ein siegelfähiger Kunststoff (10) in einem vorgegebenen Verhältnis miteinander gemischt werden;
(b) mit dieser Mischung die tiefziehbare Folie (5,14,15) hergestellt wird;
(c) der Deckel (2) und/oder das Unterteil (1) des Behälters (1,2) aus der Folie durch Tiefziehen ausgeformt wird.

8. Verfahren nach Anspruch 7, **dadurch gekennzeichnet**, daß der mit der Matrix (9) vermischte siegelfähige Kunststoff (10) so ausgewählt wird und bei der Siegelung ein solcher Druck und eine solche Temperatur angewendet werden, daß nur der siegelfähige Kunststoff (10) - nicht aber die Matrix (9)-schmilzt und im wesentlichen Umfang in die Siegelzone (20) ausgeschwitzt wird.

9. **Tiefziehbare Folie** zum Herstellen von durch Siegeln hermetisch verschließbaren, durch Aufreißen des Siegelbereiches (20) zu öffnenden und nach dem Öffnen wieder verschließbaren Behältern nach Anspruch 1 bis 6, bestehend aus einem Kunststoff-Matrixmaterial (9) und einem davon verschiedenen, aber in dem Matrixmaterial integrierten Kunststoff-Siegelmaterial (10).

10. Tiefziehbare Folie nach Anspruch 9, **dadurch gekennzeichnet,** daß das Kunststoff-Matrixmaterial (9) und das Kunststoff-Siegelmaterial (10) so gewählt sind, daß bei gleichzeitiger Anwendung von einem vorbestimmten erhöhten Druck und von einer vorbestimmten erhöhten Temperatur nur das Kunststoff-Siegelmaterial in den schmelzfähigen und fließfähigen Zustand überführbar und an die Folienoberfläche austreibbar ist.

## Claims

1. A container, comprising a beaker-shaped lower portion (1) and a cap (2) which can be hermetically connected therewith through heat sealing, wherein the cap (2) and/or the beaker-shaped lower portion (1) is of a thermoformable film with heat-sealable plastics material, wherein the container (1, 2) hermetically sealable through heat-sealing has a cap (2) detachable along a seal zone (20) and wherein the cap (2) and beaker-shaped lower portion (1) are provided, independently of the seal zone (20), in the border region (3) with especially profiled grip regions (21, 22) working in conjunction with one another as a mechanical closure zone for the frictional and/or positive re-closing,
**characterised in that**
the thermoformable film is a matrix (9) of a pre-determined first plastics material in which is embedded a heat-sealable plastics material (10) as the second plastics material, wherein the second plastics material can only be activated as a hermetic sealing zone through the concomitant application of increased pressure and increased temperature in a contact region of the sealing zone (20).

2. A container according to claim 1, **characterised in that** the seal zone (20) is arranged radially outside of the mechanical grip regions (21; 22).

3. A container according to claim 1 or claim 2, **characterised in that** at least the mechanically-interacting grip regions (21, 22) and the border regions of the cap (2) and lower portion (1) determining the seal zone (20) are sufficiently rigid or dimensionally stable for the forces necessary to remove the seal.

4. A container according to any one of claims 1 to 3, **characterised in that** the lower portion (1) and the cap (2) are provided with, in each case as limit stops to determine the relative closing position of co-operating shoulder regions (23); border zones (22) forming a mechanical closure (21) adjoining in a radial direction and matched to one another, profiled and intermeshing under friction and/or snap action, outer border regions (1a, 2a) adjoining in a radial direction and determining the seal zone (20).

5. A container according to claim 4, **characterised in that** the border zones (22) forming a mechanical closure (21) are intermeshing, substantially cylindrical or by contrast slightly undercut border sections.

6. A container according to claim 4 or claim 5, **characterised in that** the border regions (la, 2a) determining the seal zone (20) point outwards and are inclined slightly downwards.

7. A method for the manufacture of a container according to claims 1 to 6, **characterised in that**
(a) in a granular state or in a melted state a polypropylene forming a matrix (9) and a heat-sealable plastics material (10) are mixed with one another in a predetermined ratio;
(b) the thermoformable film (5, 14, 15) is manufactured using this mixture
(c) the cap (2) and/or the lower portion (1) of the container (1, 2) is formed from the film by thermoforming.

8. A method according to claim 7, **characterised in that** the heat-sealable plastics material (10) mixed with the matrix (9) is chosen and a pressure and temperature are used for sealing such that only the heat-sealable plastics material (10) - but not the matrix (9) - melts and is sweated out to a substantial extent in the seal zone (20).

9. A thermoformable film for the sealing of hermetically-sealable containers according to claims 1 to 6 which are opened by tearing open the seal region (20) and can be closed again after opening, comprising a plastics matrix material (9) and a plastics seal material (10) which differs from, but can be integrated into, the matrix material (9).

10. A thermoformable film according to claim 9, **characterised in that** the plastics matrix material (9) and the plastics seal material (10) are chosen such that with the concomitant use of a pre-determined elevated pressure and a pre-determined elevated temperature only the plastics seal material is converted to a meltable and free-flowing state and can be driven out from the film surface.

## Revendications

1. Récipient composé d'une partie inférieure (1) en forme de coupe et d'un couvercle (2) apte à lui être relié hermétiquement par thermoscellage, dans lequel le couvercle (2) et/ou la partie inférieure (1) en forme de coupe se composent d'une feuille apte à un emboutissage profond avec une matière plastique thermoscellable, le récipient (1, 2) apte à être obturé hermétiquement par thermoscellage comportant un couvercle (2) détachable le long d'une zone de scellage (20), et le couvercle (2) ainsi que la partie inférieure (1) en forme de coupe ayant dans la zone de bord (3), indépendamment de la zone de scellage (20), des zones d'enclenchement (21,22), coopérant en particulier par profil, pour une refermeture à force et/ou par complémentarité de forme, en tant que zone de fermeture mécanique, caractérisé en ce que la feuille apte à un emboutissage profond est une matrice (9) en une première matière plastique prédéderminée, matrice (9) dans laquelle une matière plastique thermoscellable (10) est incorporée en tant que deuxième matière plastique, cette deuxième matière plastique étant apte à être activée en tant que zone d'étanchéité hermétique seulement par l'utilisation simultanée d'une pression élevée et d'une température élevée dans une zone de contact de la zone de scellage (20).

2. Récipient selon la revendication 1, caractérisé en ce que la zone de scellage (20) est disposée radialement à l'extérieur des zones d'enclenchement mécanique (21,22).

3. Récipient selon l'une des revendications 1 ou 2, caractérisé en ce qu' au moins les zones de bord du couvercle (2) et de la partie inférieure (1) déterminant les zones d'enclenchement (21,22) coopérant mécaniquement et la zone de scellage (20) sont réalisées suffisamment rigides ou aptes à garder leur forme vis à vis des forces nécessaires à l'ouverture du scellage.

4. Récipient selon l'une des revendications 1 à 3, caractérisé en ce que la partie inférieure (1) et le couvercle (2) comportent respectivement des zones d'épaulement (23) coopérant comme butée de délimitation pour la détermination de la position de fermeture relative ; immédiatement après dans la direction radiale, des zones de bord (22) adaptées l'une sur l'autre, profilées et en prise l'une avec l'autre par frottement et/ou enclenchement, formant la fermeture mécanique et, s'y raccordant dans la direction radiale, des zones de bord externes (la, 2a) déterminant la zone de scellage (20).

5. Récipient selon la revendication 4, caractérisé en ce que les zones de bord (22) formant une fermeture mécanique (21) sont des sections de bord en prise l'une dans l'autre, essentiellement cylindriques ou faiblement en contre-dépouille l'une par rapport à l'autre.

6. Récipient selon la revendication 4 ou 5, caractérisé en ce que les zones de bord (la, 2a), déterminant la zone de scellage (20), sont orientées vers l'extérieur et sont légèrement inclinées vers le bas.

7. Procédé de fabrication d'un récipient selon les revendications 1 à 6, caractérisé en ce que
(a) sont mélangés ensemble dans un rapport prédéterminé, à l'état de granulés ou à l'état fondu, un polypropylène formant une matrice (9) et une matière plastique (10) apte au scellage;
(b) la feuille apte à 1' emboutissage profond (5, 14, 15) est fabriquée avec ce mélange ;
(c) le couvercle (2) et/ou la partie inférieure (1) du récipient (1, 2) sont formés par emboutissage profond de la feuille.

8. Procédé selon la revendication 7, caractérisé en ce que la matière plastique apte au scellage (10) mélangée à la matrice (9) est choisie de telle sorte , et lors du scellage sont utilisées une pression telle et une température telle , que seule la matière plastique apte au scellage (10) - mais pas la matrice (9)- fonde et soit exsudée essentiellement dans la zone de scellage (20).

9. Feuille apte à l' emboutissage profond pour la fabrication de récipients selon les revendications 1 à 6, aptes à être fermés hermétiquement par scellage, à ouverture par déchirage de la zone de scellage (20) et pouvant être de nouveau fermés après l'ouverture, se composant d'un matériau matrice en matière plastique (9) et d'un matériau de scellage en matière plastique (10) différent du matériau matrice, mais intégré dans ce matériau matrice.

10. Feuille apte à l'emboutissage profond selon la revendication 9, caractérisée en ce que le matériau matrice en matière plastique (9) et le matériau apte au scellage en matière plastique (10) sont choisis de sorte que, lors de l'utilisation simultanée d'une pression élevée prédéterminée et d'une température élevée prédéterminée, seul le matériau de scellage en matière plastique est apte à se transformer à l'état fondant et fluide ainsi qu'à être expulsé à la surface de la feuille.
